# EUROPEAN PATENT SPECIFICATION

(11) **EP 2 055 423 B1**
(45) Date of publication and mention of the grant of the patent: **22.05.2013**
(21) Application number: 07792747.3
(22) Date of filing: 20.08.2007
(51) Int. Cl.: B23K 26/38, B23K 26/40, G02B 5/30

(54) **A METHOD OF CUTTING AN OPTICAL FILM BY USING A LASER BEAM**
VERFAHREN ZUM SCHNEIDEN EINER OPTISCHEN FOLIE UNTER VERWENDUNG EINES LASERSTRAHLES
PROCEDE DE DECOUPE D'UN FILM OPTIQUE EN UTILISANT UN FAISCEAU LASER

(30) Priority: 23.08.2006 JP 2006226870
(43) Date of publication of application: 06.05.2009
(73) Proprietor: NITTO DENKO CORPORATION, Ibaraki-shi, Osaka 567-8680 (JP)
(72) Inventor: NISHIDA, Kanji, Ibaraki-shi, Osaka 567-8680, (JP); HINO, Atsushi, Ibaraki-shi, Osaka 567-8680 (JP); AMANO, Takaichi, Ibaraki-sho, Osaka 567-8680 (JP); KITADA, Kazuo, Ibaraki-shi, Osaka 567-8680 (JP)
(74) Representative: Grünecker, Kinkeldey, Stockmair & Schwanhäusser
(86) International application number: PCT/JP2007/066134
(87) International publication number: WO 2008/023672

(56) References cited:
- JP-A- 1 034 593
- JP-A- 7 022 552
- JP-A- 01 034 593
- JP-A- 04 091 879
- JP-A- 11 077 352
- JP-A- 60 121 090
- JP-A- 2006 061 926

## Description

This invention relates to a method of cutting an optical film according to the preamble of claim 1, using a laser beam and in particular, it relates to method of cutting an optical film such as a polarizing film by using a laser beam of which energy per unit length and continuous irradiation time are controlled.

### BACKGROUND ART

For cutting various optical films such as a polarizing film, there are a mechanical cutting method of cutting with the use of a die or a cutting blade and a laser cutting method of irradiating an optical film with a laser beam.

In the mechanical cutting method, fine cutting swarf is generated from a cutting surface during cutting the optical film and, in some cases, the cutting swarf undesirably enters the inside of a liquid crystal panel when mounting the optical film to the liquid crystal panel. When the cutting swarf enters the inside of the liquid crystal panel, a display defect of the liquid crystal panel occurs, thereby resulting in a problem of a reduction in production yield of the liquid crystal panels.

In contrast, in the case of the laser cutting method, since such cutting swarf is hardly generated during cutting the optical film, the production yield of liquid crystal panels and the like is not so much reduced as compared to the above-described mechanical cutting method, and the laser cutting method is considered to be superior to the mechanical cutting method.

For example, JP-A-2005-189530, on which the preamble of claim 1 is based, discloses a method of producing a laminate type polarizing plate in which a laminated body is formed by laminating a polarizing plate and a resin film having an optical transmittance of 80% or more and a glass transition temperature of 100°C or more and then cutting the laminated body by irradiating a resin film side of the laminated body with a laser.

According to the above-mentioned production method of a laminate type polarizing plate, it is possible to prevent generation of projections and protrusions on a. cutting surface of the polarizing plate by irradiating the resin film side in the laminated body of the polarizing plate and the resin film.
Patent Publication 1: JP-A-2005-189530

### DISCLOSURE OF THE INVENTION

However, the laser used in the above-mentioned production method of a laminate type polarizing plate is generally a gaussian beam (beam of which beam intensity is of gaussian distribution). Due to the gaussian distribution of the beam intensity, the gaussian beam has characteristics that beam intensity at a central part of a beam spot is large, but the beam intensity is gradually reduced as approaching to the outside of the central part.

Therefore, when an optical film is cut by using such gaussian beam, the optical film is firstly cut due to decomposition and evaporation of an optical film component caused at the central part of the beam spot, but, since the beam intensity is reduced as approaching to the outside of the central part of the beam spot, the optical film component is gradually molten and decomposed.

In this case, a stress directed to the outside occurs when the optical film component is decomposed and evaporated at the central part of the beam spot so that, at the outside of the central part of the beam spot, the molten optical film component is pressed outward without being decomposed nor evaporated due to the stress. As a result, a projection (raised part) of the molten component is generated at a cutting surface of the optical film.

When the raised part is generated on the optical film cutting surface as described above, there are problems that a bonding defect at an edge of a liquid crystal panel or various optical defects may occur when incorporating the optical film into the liquid crystal panel or the like.

This invention has been accomplished for solving the above-described conventional problems, and an object thereof is to provide a method of cutting an optical film such as a polarizing film by using a laser beam of which energy per unit length and continuous irradiation time are controlled even in the case where the laser beam has characteristics of a gaussian beam, which is capable of maintaining a raised part size as small as possible in a cutting surface of the optical film to thereby prevent generation of bonding defect and optical defect when the optical film is incorporated into various optical panels.

A method of cutting an optical film according to the present invention is defined in claim 1.

According to the optical film cutting method of the present invention, since the optical film is cut by irradiating the optical film with a laser beam under the conditions that energy per unit length is 0.12 to 0.167 J/mm and that continuous irradiation time is 0.1 msec or less, it is possible to maintain the raised part size on the optical film cutting surface as small as possible even in the case where the laser beam has characteristics of a gaussian beam, thereby enabling prevention of bonding defect and optical defect when the optical film is incorporated into various optical panels.

According to the cutting method using the laser beam, it is possible to obtain an optical film in which a size of a raised part generated on a cutting surface thereof is 30 µm or less.

### BRIEF DESCRIPTION OF THE DRAWING

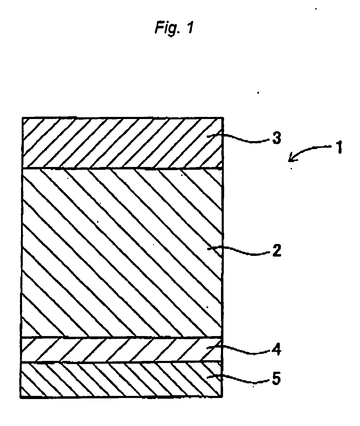

Fig. 1 is a diagram schematically showing a structure of an optical film.

### Description of Reference Numerals

1: optical film
2: polarizing plate
3: surface protection film
4: adhesive layer
5: separator

### BEST MODE FOR CARRYING OUT THE INVENTION

Hereinafter, a optical film cutting method according to this invention will be described in detail based on embodiments and with reference to the drawings.

Initially, a structure of an optical film will be described based on Fig. 1. Fig. 1 is a diagram schematically showing the structure of the optical film.

In Fig. 1, an optical film 1 is basically formed of a polarizing plate 2, a surface protection film 3 bonded to an upper surface of the polarizing plate 2, a separator 5 bonded to a lower surface of the polarizing plate 2 via an adhesive layer 4.

It is possible to use known polarizing plates as the polarizing plate 2, and examples of the polarizing plates include those obtained by forming a transparent protection layer on one surface or each of both surfaces of a polarizing film. The polarizing film is not particularly limited, and it is possible to use known polarizing films. More specifically, it is possible to use polarizing films prepared by dyeing various films by causing the films to absorb a dichromatic substance such as iodine and a dichromatic dye, followed by crosslinking, drawing, and drying, for example. Among the above, those allowing a linear polarized light to pass therethrough when a natural light is made incident thereto are preferred, and those having excellent optical transmittance and polarizing degree are preferred. Examples of the various films that are caused to absorb the dichromatic substance include a hydrophilic polymer film such as a PVA film, a partially formalized PVA film, an ethylene-vinyl acetate copolymer-based partially saponified film, and a cellulose film, and other films such as a polyene oriented film such as a dehydrochlorination treatment product of PVA and a dehydrochlorination treatment product of polyvinyl chloride may also be used. Among the above, the PVA film is preferred. A thickness of the polarizing film ordinarily is about 200 µm without limitation thereto.

As the transparent protection layer, known transparent films are usable without particular limitation thereto, and those excellent in transparency, mechanical strength, heat stability, moisture shielding property, isotropy, and so on are preferred. Specific examples of a material for the transparent layer include a polyester-based polymer such as polyethylene terephthalate and polyethylene naphthalate; a cellulose-based polymer such as diacetyl cellulose and triacetyl cellulose; an acrylic polymer such as polymethyl (meth)acrylate; a styrene-based polymer such as polystyrene and an acrylonitrile-styrene copolymer (AS resin); and a polycarbonate-based polymer. Also, the examples include a polyolefin-based polymer such as polyethylene, polypropylene, cyclo-based or norbornene-structure-containing polyolefin, and ethylene-propylene copolymer, a vinyl chloride polymer, a nylon- or aromatic polyamide-based polymer, an imide-based polymer, a sulfone-based polymer, a polyether sulfone-based polymer, a polyether ether ketone-based polymer, a vinylidene chloride-based polymer, a vinyl alcohol-based polymer, a vinyl butyral-based polymer, an allylate-based polymer, a polyoxymethylene-based polymer, an epoxy-based polymer, and a mixed polymer thereof Among the above, the cellulose-based polymer is preferred. A thickness of the transparent protection film is not particularly limited.

Bonding between the polarizing film and the transparent protection layer is not particularly limited, and, for example, an isocyanate-based adhesive, a polyvinyl alcohol-based adhesive, a gelatin-based adhesive, a vinyl-based latex, a water-based polyester, and the like may be used.

Various treatments such as a hard coat treatment, antireflection treatment, antisticking treatment, a diffusion treatment, an antiglare treatment an antiglare with antireflection treatment, an antistatic treatment, a contamination control treatment, and the like may be performed on a surface of the polarizing plate 2 in accordance with the intended use.

The hard coat treatment has an aim of preventing scratching and the like on the polarizing plate surface and can be performed, for example, by a method of forming on a surface of a film a hard film excellent in hardness and slip characteristics by using an acryl-based or silicon-based UV curable resin and the like. The antireflection treatment has an aim of preventing reflection of an external light on a surface of the optical film and can be performed by way of formation of a known antireflection film (physical optics film or coated thin film) and the like.

The antiglare treatment has an aim of preventing an external light from being reflected on an optical film surface to inhibit visibility of a light passed through the polarizing plate and the like. For example, film roughening by a sand blast method, an emboss processing method, and the like or a film formation method of blending transparent particles to a film forming material and the like may be performed for providing a fine unevenness structure on the film surface. As the fine particles to be contained for forming the surface fine unevenness, those having an average particle diameter of 0.5 to 50 µm for example, and formed from an inorganic material such as silica, alumina, titania, zirconia, tin oxide, indium oxide, cadmium oxide, and antimony oxide and the like may be used. In the case of forming the surface fine unevenness structure, a use amount of the fine particles may ordinarily be about 2 to 50 parts by weight, preferably 5 to 25 parts by weight with respect to 100 parts by weight of a resin. The antiglare layer may be used also as a diffusion layer for enlarging an eyesight (eyesight enlargement function) or the like by diffusing a polarizing plate-transmitted light.

A method for laminating the polarizing film and the transparent protection layer is not particularly limited, and it is possible to perform a known method by using, for example, an isocyanate-based adhesive, a polyvinyl alcohol-based adhesive, a gelatin-based adhesive, a vinyl latex-based adhesive, and a water-based polyester adhesive, or the like. The type of the adhesive may appropriately be decided depending on materials of the polarizer and the protection layer and the like.

As the surface protection layer 3, those excellent in transparency, impact resistance, and heat resistance as described above are preferred, and examples thereof include an epoxy resin, a polyester resin, a methacrylic resin, a polycarbonate (PC) resin, a polyethylene naphthalate (PEN) resin, a polyethylene terephthalate (PET) resin, triacetyl cellulose (TAC), a polynorbomene resin such as ARTON (trade name) manufactured by JSR Corporation, a polyimide resin, a polyether imide resin, a polyamide resin, a polysulfone resin, a polyphenylene sulfide resin, and a polyether sulfone resin, among which the epoxy resin is preferred. These may be used alone or in combination of two or more. A thickness of the surface protection film 3 may preferably be about 60 µm.

The epoxy resin may preferably have an epoxy equivalent of 100 to 1000 and a softening point of 120°C or less from the view points of physical properties such as flexibility and strength of a resin sheet to be obtained. Further, it is preferable to use an epoxy resin of a two component type that is in a liquid state at a temperature equal to or lower than a temperature at which coating is performed, particularly at an ordinary temperature, for example, in view of obtainment of an epoxy resin-containing liquid excellent in coating property, expansion to a sheet form and the like.

Examples of the epoxy resin include a bisphenol type such as a bisphenol A type, a bisphenol F type, a bisphenol S type, and those obtained by adding water thereto; a novolac type such as a phenol novolac type and a cresol novolac type; a nitrogen ring-containing type such as a triglycidyl isocyanurate type and hydantoin type; an alicyclic type; an aliphatic type; an aromatic type such as naphthalene type; a low water absorption type such as a glycidylether type and a biphenyl type; a dicyclo type; an ester type; an etherester type; and modified types thereof. Among the above, from the view points of decoloration prevention and the like, the bisphenol A type epoxy resin, the alicyclic epoxy resin, the triglycidyl isocyanurate type are preferred, and the alicyclic epoxy resin is particularly preferred. These may be used alone or in combination of two or more.

Since the epoxy resin is excellent in optical isotropy, a phase difference thereof may preferably be 5 nm or less, more preferably 1 nm.

As the separator 5 to be bonded via the adhesive layer 4 on the lower surface of the polarizing plate 2, for example, a sheet containing a resin which is excellent in mechanical strength and heat resistance is preferred, and examples thereof include a polyester-based polymer such as polyethylene terephthalate and polyethylene naphthalate; a cellulose-based polymer such as diacetyl cellulose and triacetyl cellulose; an acrylic polymer such as polymethyl (meth)acrylate; a styrene-based polymer such as polystyrene and an acrylonitrile-styrene copolymer (AS resin); and a polycarbonate-based polymer. Also, the examples include a polyolefin-based polymer such as polyethylene, polypropylene, cyclo-based or norbomene-structure-containing polyolefin, and ethylene-propylene copolymer, a vinyl chloride polymer, a nylon- or aromatic polyamide-based polymer, an imide-based polymer, a sulfone-based polymer, a polyether sulfone-based polymer, a polyether ether ketone-based polymer, a vinylidene chloride-based polymer, a vinyl alcohol-based polymer, a vinyl butyral-based polymer, an allylate-based polymer, a polyoxymethylene-based polymer, an epoxy-based polymer, and a mixed polymer thereof. Among the above, the polyester-based polymer such as polyethylene terephthalate and polyethylene naphthalate is preferred. A thickness of the separator 5 may preferably be about 38 µm.

The adhesive forming the adhesive layer 4 is not particularly limited, and examples thereof include a polymer-based adhesive such as acrylic, vinyl alcohol-based, silicone-based, polyester-based, polyurethane-based, and polyether-based ones; and a rubber-based adhesive. Also, an adhesive formed of a water-soluble crosslinking agent of a vinyl alcohol-based polymer such as gultaraldehyde, melamine, and oxalic acid and the like is usable. The above-mentioned adhesives are hardly peeled off even under the influence of moisture and heat and is excellent in optical transmittance and polarizing degree. Among the above, from the view points of transparency and durability, the acrylic adhesive may most preferably be used. The adhesive is not limited by the type such as a thermal crosslinking type and a photo-crosslinking (UV ray or electron beam) type.

The acrylic adhesive contains an acrylic polymer having transparency and the above-described dynamic storage elastic modulus as a main agent, and an additive may appropriately be added to the acrylic adhesive, or the acrylic adhesive may be made into a composite by using an inorganic filler. The acrylic polymer contains (meth)acrylate alkyl ester as a main component and is obtainable by adding a reforming monomer having a polar group such as an OH group, a COOH group, an amino group, an amide group, a sulfonic acid group, and a phosphoric acid group and capable of copolymerization with the main component for the purpose of improving contact with the protection film of the polarizing plate via a base coat layer, followed by a polymerization treatment of the components by an ordinary method. For the purpose of adjustment of heat resistance, a crosslinking treatment is performed when so required.

Hereinafter, the laser beam to be used in this embodiment will be described. Examples of a laser include a CO₂ laser, a YAG laser, and a UV laser and, among all, the CO₂ laser is preferred from the view points of great applicability to a wide thickness range and being free from breakage and crack. In the laser irradiation, an output and a speed are not limited, and the cutting may be performed by one irradiation or by a plurality of irradiations. The output of the laser irradiation is, for example, 10 to 800 W, in which the output for cutting by one irradiation may preferably be 100 to 350 W, and the output for cutting by two irradiations may preferably be 50 to 200 W.

Each of the laser beams generated by the various lasers basically is a gaussian beam having a maximum value of beam strength at the central part of a laser spot and, since the beam strength is in the form of a gaussian distribution, the beam strength has characteristics of being large at the central part of the beam spot and gradually reduced as approaching to the outside of the central part.

Therefore, as described in the column of background art, when the gaussian beam is used for cutting the optical film 1, although the cutting starts due to decomposition and evaporation of an optical film component caused at the central part of the beam spot, since the beam intensity is reduced as approaching to the outside of the central part of the beam spot, the optical film component is gradually molten and decomposed.

In this case, a stress directed to the outside occurs when the optical film component is decomposed and evaporated at the central part of the beam spot, so that the molten optical film component is pressed to the outside without being decomposed nor evaporated at the outside of the central part of the beam spot due to the stress. As a result, since a raised part of the molten component is generated at a cutting surface of the optical film, a bonding defect at an edge of a liquid crystal panel or various optical defects may occur when incorporating the optical film into the liquid crystal panel.

Accordingly, in this embodiment, the above-described gaussian beam is used, and conditions of the gaussian beam that energy per unit length is 0.12 to 0.167 J/mm and that continuous irradiation time is 0.1 msec or less are set. It is possible to perform such condition setting by providing a laser generation apparatus with various optical elements and controlling the optical elements.

Hereinafter, this invention will be described in more details by using examples and comparative example, but this invention is not limited to the following examples. The size of a raised part generated on a cutting surface of an optical film after cutting was measured by using a laser microscope or an optical microscope.

### Example 1

### (Production of Polarizing Plate)

A polarizer was produced by drawing a polyvinyl alcohol film (thickness: 80 µm) by 5 times in an iodine aqueous solution, followed by drying. Subsequently, a UV urethane hard coat layer having a reflectance of 1% or less and a physical optics thin film (AR layer) were formed in this order on one surface of a triacetyl cellulose film (TAC film). The treated TAC film was laminated on one surface of the polarizer and a non-treated TAC film was laminated on the other surface of the polarizer via an adhesive, respectively, to obtain a polarizing plate (thickness: 200 µm, optical transmittance: 45%).

### (Production of Surface Protection Film)

To 100 parts by weight of 3,4-epoxycyclohexylmethyl-3,4-epoxycyclohexanecarboxylate, 120 parts by weight of methyltetrahydrophthalic anhydride as a curing agent and 2 parts by weight of tetra-n-butylphosphonium O,O-diethylphosphorodithioate as a curing accelerator were added and mixed with stirring, followed by forming a pre-film (thickness: 600 µm) by employing a casting method. The pre-film was heat-cured at 180°C for 30 minutes to produce an epoxy film (thickness: 700 µm, 380 mm x 280 mm). Subsequently, an acryl urethane UV resin was coated on one surface of the above-mentioned epoxy film to form a protection layer (thickness: 3 µm), thereby obtaining a resin film. The resin film had an optical transmittance of 91.7% and a glass transition temperature of 180°C.

### (Production of Adhesive)

100 parts by weight of butyl acrylate, 5.0 parts by weight of acrylic acid, 0.075 part by weight of 2-hydroxyethyl acrylate, 0.3 part by weight of azobis isobutyronitrile, and 250 parts by weight of ethyl acetate were mixed, and the mixture was subjected to a reaction at about 60°C for 6 hours with stirring to obtain an acrylic polymer solution having a weight average molecular weight of 1,630,000. To the acrylic polymer, 0.6 part by weight of an isocyanate-based polyfunctional compound (trade name: Colonate L; manufactured by Nippon Polyurethane Industry Co., Ltd.) and 0.08 part by weight of a silane coupling agent (trade name: KBM403, manufactured by Shin-Etsu Chemical Co., Ltd.) were added with respect to 100 parts by weight of a polymer solid component of the acrylic polymer to prepare an adhesive solution. The thus-obtained adhesive solution had a 90° peeling strength of 10 N/25 mm.

### (Production of Separator)

The above-mentioned adhesive was coated on a PET film (thickness: 50 µm) by a thickness of 10 µm, followed by drying to obtain a surface protection sheet.

### (Production of Optical Film)

The non-treated TAC film side of the polarizing plate was attached to the epoxy film side of the surface protection film via the adhesive (thickness 23 µm). The separator was attached to a surface of the laminated body by using the adhesive.

### (Cutting Method)

By using a high precision processing CO₂ laser (trade name: SILAS-SAM (SPL2305); manufactured by Shibuya Kogyo Co., Ltd.; wavelength: 10.6 µm), the optical film was cut by irradiating the optical film with a laser from the surface protection film side. In this case, energy per unit length was set to 0.120 J/mm, and continuous irradiation time was set to 0.100 msec in Example 1 as shown in Table 1. A beam diameter of the laser beam was adjusted to 100 µm, and a power of the laser beam was adjusted to 120 W. A scanning speed of the laser beam was set to 60 m/min.

A result of measurement of a raised part generated on a film cutting surface in the case of cutting the optical film in accordance with Example 1 is shown in Table 2.

### Example 2

In Example 2, energy per unit length was set to 0.167 J/mm, and continuous irradiation time was set to 0.033 msec as shown in Table 1. A beam diameter of the laser beam was adjusted to 100 µm, and a power of the laser beam was adjusted to 500 W. A scanning speed of the laser beam was set to 180 m/min. Other parameters of the conditions are the same as those of Example 1.

A result of measurement of a raised part generated on a film cutting surface in the case of cutting the optical film in accordance with Example 2 is shown in Table 2.

### Example 3

In Example 3, energy per unit length was set to 0.155 J/mm, and continuous irradiation time was set to 0.025 msec as shown in Table 1. A beam diameter of the laser beam was adjusted to 100 µm, and a power of the laser beam was adjusted to 620 W. A scanning speed of the laser beam was set to 240 m/min. Other parameters of the conditions are the same as those of Example 1.

A result of measurement of a raised part generated on a film cutting surface in the case of cutting the optical film in accordance with Example 3 is shown in Table 2.

### Comparative Example

In Comparative Example, energy per unit length was set to 0.300 J/mm, and continuous irradiation time was set to 0.600 msec as shown in Table 1. A beam diameter of the laser beam was adjusted to 100 µm, and a power of the laser beam was adjusted to 50 W. A scanning speed of the laser beam was set to 10 m/min. Other parameters of the conditions are the same as those of Example 1.

A result of measurement of a raised part generated on a film cutting surface in the case of cutting the optical film in accordance with Comparative Example is shown in Table 2.

Shown in Table 1 are the conditions set for the laser beams used in Example 1 to Example 3 and Comparative Example.

**Table 1**

| | Irradiation Time (msec) | Energy per Unit Length (J/mm) | Beam Diameter (µm) | Power (W) | Speed (m/min) |
|---|---|---|---|---|---|
| Example 1 | 0.100 | 0.120 | 100 | 120 | 60 |
| Example 2 | 0.033 | 0.167 | 100 | 500 | 180 |
| Example 3 | 0.025 | 0.155 | 100 | 620 | 240 |
| Comparative Example | 0.600 | 0.300 | 100 | 50 | 10 |

Also, shown in Table 2 are sizes of the raised parts measured in Example 1 to Example 3 and Comparative Example.

**Table 2**

| | Raised Part [µm] |
|---|---|
| Example 1 | 29 |
| Example 2 | 18 |
| Example 3 | 12 |
| Comparative Example | 45 |

In Table 2, the size of the raised part generated on the cutting surface of the optical film that was cut according to Example 1 was 29 µm; the size of the raised part generated on the cutting surface of the optical film that was cut according to Example 2 was 18 µm; and the size of the raised part generated on the cutting surface of the optical film that was cut according to Example 3 was 12 µm. Consequently, it is possible to suppress the size of the raised part to 30 µm or less in accordance with any Example. From the results, it is understood that it is possible to suppress the size of the raised part to 30 µm or less by cutting the optical film by irradiating the optical film 1 with the laser beam under the conditions that energy per unit length is 0.12 to 0.167 J/mm and that continuous irradiation time is 0.1 msec or less.

In contrast, it is understood that, since the energy per unit length was 0.300 J/mm which was out of 0.12 to 0.167 J/mm and the continuous irradiation time was 0.600 msec which exceeded 0.1 msec in Comparative Example, the size of the raised part generated on the cutting surface of the optical film that was cut in accordance with Comparative Example was as large as 45 µm.

While the present invention has been described in detail and with reference to specific embodiments thereof, it will be apparent to one skilled in the art that various changes and modifications can be made therein without departing from the scope thereof.

### INDUSTRIAL APPLICABILITY

According to the method of cutting an optical film of this invention, it is possible to provide a the method of cutting an optical film such as a polarizing film by using a laser beam of which energy per unit length and continuous irradiation time are controlled even in the case where the laser beam has characteristics of a gaussian beam, which is capable of maintaining a raised part size as small as possible in a cutting surface of the optical film and preventing generation of bonding defect and optical defect when the optical film is incorporated into various optical panels.

## Claims

1. A method of cutting an optical film, **characterized by** comprising cutting an optical film (1), the optical film (1) comprising a polarizing plate (2), a surface protection film (3) bonded to an upper surface of the polarizing plate (2), and a separator (5) bonded to a lower surface of the polarizing plate (2) via an adhesive layer (4), by irradiating the optical film with a laser beam from the surface protection film (3) side, under conditions that an energy per unit scanning length is 0.12 to 0.167 J/mm, that a continuous irradiation time is 0.1 msec or less, and that the beam diameter of the laser beam is 100 µm.

2. The optical film cutting method according to claim 1, wherein a size of a raised part generated on a film cutting surface when cutting the optical film (1) with the laser beam is 30 µm or less.

3. The optical film cutting method according to claim 1, wherein the laser is a CO₂ laser.

## Patentansprüche

1. Verfahren zum Schneiden eines optischen Films,
**dadurch gekennzeichnet,**
**dass** es Schneiden eines optischen Films (1) umfasst, wobei der optische Film (1) eine polarisierende Platte (2), einen Oberflächenschutzfilm (3), der an eine obere Fläche der polarisierenden Platte (2) angeklebt ist, sowie einen Separator (5) umfasst, der über eine Klebeschicht (4) an eine untere Fläche der polarisierenden Platte (2) angeklebt ist, wobei der optische Film mit einem Laserstrahl von der Seite des Oberflächenschutzfilms (3) her bestrahlt wird und dabei eine Energie pro Abtast-Längeneinheit 0,12 bis 0,167 J/mm beträgt, eine kontinuierliche Bestrahlungszeit 0,1 ms oder kürzer ist und der Strahldurchmesser des Laserstrahls 100 µm beträgt.

2. Verfahren zum Schneiden eines optischen Films nach Anspruch 1, wobei eine Größe eines an einer Film-Schnittfläche beim Schneiden des optischen Films (1) mit dem Laserstrahl erzeugten erhöhten Teils 30 µm oder weniger beträgt.

3. Verfahren zum Schneiden eines optischen Films nach Anspruch 1, wobei der Laser ein CO₂ -Laser ist.

## Revendications

1. Procédé de découpe d'un film optique **caractérisé en ce qu'**il comprend la découpe d'un film optique (1), le film optique (1) comprenant une plaque de polarisation (2), un film de protection de surface (3) lié à la surface supérieure de la plaque de polarisation (2) et un séparateur (5) lié à la surface inférieure de la plaque de polarisation (2) par l'intermédiaire d'une couche adhésive (4), par irradiation du film optique avec un faisceau laser depuis le côté film de protection de surface (3) dans des conditions telles que l'énergie par unité de longueur de balayage est de 0,12 J/mm à 0,167 J/mm, que le temps d'irradiation continue est au maximum de 0,1 ms et que le diamètre du faisceau laser est de 100 µm.

2. Procédé de découpe d'un film optique selon la revendication 1, dans lequel la hauteur d'une partie surélevée générée sur la surface de découpe de film lors de la découpe du film optique (1) avec le faisceau laser est au maximum de 30 µm.

3. Procédé de découpe d'un film optique selon la revendication 1, dans lequel le laser est un laser au CO₂.
